(19) Europäisches Patentamt European Patent Office Office européen des brevets

(11) **EP 4 481 979 A1**

(12) **EUROPEAN PATENT APPLICATION**

(43) Date of publication:
**25.12.2024  Bulletin 2024/52**

(21) Application number: **23210764.9**

(22) Date of filing: **17.11.2023**

(51) International Patent Classification (IPC):
***H02J 3/38*** (2006.01)          *H02J 3/32* (2006.01)
***H02J 3/40*** (2006.01)

(52) Cooperative Patent Classification (CPC):
**H02J 3/381; H02J 3/388;** H02J 3/32; H02J 3/40;
H02J 2300/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2023  CN 202310740240**

(71) Applicant: **Sungrow Power Supply Co., Ltd.
Hefei, Anhui 230088 (CN)**

(72) Inventors:
• **JING, Zhen
  Hefei, Anhui (CN)**
• **TAO, Tinghuan
  Hefei, Anhui (CN)**
• **MENG, Hao
  Hefei, Anhui (CN)**
• **XU, Jincheng
  Hefei, Anhui (CN)**
• **WANG, Xu
  Hefei, Anhui (CN)**

(74) Representative: **Zacco Norway AS
P.O. Box 488 Skøyen
0213 Oslo (NO)**

(54) **SYSTEM OF MACHINES CONNECTED IN PARALLEL, AND METHOD FOR TRANSITION BETWEEN ON-GRID MODE AND OFF-GRID MODE**

(57)    A system of machines connected in parallel and a method for controlling transition between an on-grid mode and an off-grid mode are provided. A master machine and a slave machine each are an inverter or a power converter. On-grid ports of the master machine and the slave machine are connected to a grid. Off-grid ports of the master machine and the slave machine are connected, for supplying a load. In transition from the on-grid mode to the off-grid mode, the master machine switches from a current source mode to a voltage source mode based on amplitude and phase of voltage with which the system is off a gird, and the slave machine senses voltage at the off-grid port of the slave machine in amplitude and phase, and switches from the current source mode to the voltage source mode based on the sensed voltage. No highspeed communications involved in the transition.

**Figure 2**

## Description

### FIELD

The present disclosure relates to the technical field of transition between an on-grid mode and an off-grid mode, and particularly to a system of machines connected in parallel and a method for transition between an on-grid mode and an off-grid mode.

### BACKGROUND

In order to improve load capacity, a system of machines connected in parallel is increasingly popular. For example, the system is a household energy storage system, and the machines each are a power conversion system. On-grid ports of the multiple power converters are all connected to a grid. Off-grid ports of the multiple power converters all are connected to a load to supply power to the load. The machines each may be an inverter in other scenarios.

When the grid functions properly, the machines are all connected to the grid. Electrical energy outputted by the grid is transferred from the on-grid port to the off-grid port via a relay and thence to the load. When the grid functions improperly, the power conversion system supplies power to the load via the off-grid port.

At present, a master machine and a slave machine in such system interact through high-speed communications. The master machine sends an operating state, an operating mode and an electrical parameter to the slave machine, for the slave machine to synchronize with the master machine. For example, the electrical parameter includes amplitude, phase, frequency or power. However, a communication bus is indispensable to the high-speed communications, resulting in high costs of hardware.

### SUMMARY

In view of this, a system of machines connected in parallel and a method for controlling transition between an on-grid mode and an off-grid mode are provided according to the present disclosure. Therefore, the slave machine can synchronize with the master machine during the transition between the on-grid mode and the off-grid mode, without high-speed communications.

A system of machines connected in parallel is provided according to an embodiment of the present disclosure. A master machine and a slave machine among the machines each are an inverter or a power converter. An on-grid port of the master machine and an on-grid port of the slave machine are configured to connect a grid. An off-grid port of the master machine and an off-grid port of the slave machine are connected, for supplying power to a load. The master machine is configured to switch from a current source mode to a voltage source mode based on amplitude and phase of voltage in transition from an on-grid mode to an off-grid mode. The system is off the gird when the voltage is at the amplitude and the phase. The slave machine is configured to sense voltage at the off-grid port of the slave machine in amplitude and phase, and switch from the current source mode to the voltage source mode based on the sensed voltage, in the transition from the on-grid mode to the off-grid mode.

Preferably, the master machine and the slave machine are configured to operate in the current source mode, in the on-grid mode. The master machine and the slave machine are configured to regulate power based on droop characteristics, in the voltage source mode.

Preferably, an on-grid relay in the master machine is configured to be switched off, a bypass relay in the master machine between the on-grid and the off-grid of the master machine is configured to be switched off, and an off-grid relay in the master machine is configured to be switched on, in the transition from the on-grid mode to the off-grid mode.

Preferably, the master machine is configured to switch from the current source mode to the voltage source mode when the voltage at the amplitude equal to

$$\sqrt{N}/N$$

of amplitude of voltage in the on-grid mode. The master machine and the slave machine are N in total.

Preferably, the master machine and the slave machine are configured to sense a grid voltage at the respective on-grid ports, synchronize respective output voltages with the grid voltage, connect to the grid after the output voltages are synchronized with the grid voltage, and switch from the voltage source mode to the current source mode, in transition from the off-grid mode to the on-grid mode.

Preferably, a relay in the master machine and a relay in the slave machine are configured to be switched on when a preset period of time passed since the output voltages are synchronized with the grid voltage, wherein the preset period of time is related to a larger one between settling time of a phase-locked loop and time for the phase-locked loop to suppress a direct-current component.

Preferably, the master machine and the slave machine each are configured to output single-phase alternating-current voltage or three-phase alternating-current voltage.

Preferably, a first input port of the master machine is configured to connect a first battery. A first input port of the slave machine is configured to connect a second battery.

Preferably, a second input port of the master machine is configured to connect a first photovoltaic string. A second input port of the slave machine is configured to connect a second photovoltaic string.

Preferably, the master machine is one in number, and the slave machine is one or more in number.

A method for controlling transition between an on-grid mode and an off-grid mode is further provided according to the present disclosure. The method is applied to a system of machines connected in parallel. The method includes: in transition from the on-grid mode to the off-grid mode: switching a master machine from a current source mode to a voltage source mode based on amplitude and phase of voltage with which the system is off a gird; sensing voltage at an off-grid port of a slave machine in amplitude and phase by the slave machine; and switching the slave machine from the current source mode to the voltage source mode based on the sensed voltage. The master machine and the slave machine each are an inverter or power converter, an on-grid port of the master machine and an on-grid port of the slave machine are connected to the grid, and an off-grid port of the master machine and the off-grid port of the slave machine are connected, for supplying power to a load.

Preferably, the method further includes: operating the master machine and the slave machine in the current source mode, in the on-grid mode.

Preferably, the method further includes: in transition from the off-grid mode to the on-grid mode, sensing a grid voltage at respective on-grid ports and synchronizing respective output voltages with the grid voltage by the master machine and the slave machine; connecting the master machine and the slave machine to the grid after the output voltages are synchronized with the grid voltage; and switching the master machine and the slave machine from the voltage source mode to the current source mode.

Preferably, the connecting the master machine and the slave machine to the grid includes: switching on a relay in the master machine and a relay in the slave machine when a preset period of time passed since the output voltages are synchronized with the grid voltage. The preset period of time is related to a larger one between settling time of a phase-locked loop and time for the phase-locked loop to suppress a direct-current component.

Preferably, the switching the master machine from the current source mode to the voltage source mode based on amplitude and phase of voltage with which the system is off the gird includes: switching the master machine from the current source mode to the voltage source mode when the voltage at the amplitude equal to

$$\sqrt{N}/N$$

of amplitude of voltage in the on-grid mode, wherein the master machine and the slave machine are N in total.

With the above technical solution, the present disclosure has the following beneficial effects.

In the system of machines connected in parallel according to embodiments of the present disclosure, the master machine and the slave machine each operate as the voltage source mode when the system is connected to the grid. In the transition from the on-grid mode to the off-grid mode, the master machine switches to the off-grid mode based on the voltage in the off-grid mode before the slave machine. Since the off-grid port of the master machine is connected to the off-grid port of the slave machine, the voltage of the off-grid port of the slave machine is the same as the voltage of the off-grid port of the master machine. Subsequently, the slave machine senses the voltage of the off-grid port and operates tracking the sensed voltage of the master machine. In this way, the output voltage of the master machine is equal to the output voltage of the slave machine, and therefore no voltage difference between the master machine and the slave machine. Therefore, it is unnecessary for the master machine to send the electrical parameter to the slave machine and therefore involves no high-speed communications between the master machine and the slave machine in the transition from the on-grid mode to the off-grid mode according to the technical solution of the embodiments of the present disclosure. Instead, the slave machine directly senses the voltage of its off-grid port to synchronize with the master machine. Further, there is no circulating current between the master machine and the slave machine throughout the transition.

## BRIEF DESCRIPTION OF THE DRAWINGS

Figure 1 is a schematic diagram illustrating a system of machines connected in parallel according to an embodiment of the present disclosure;

Figure 2 is a schematic diagram illustrating the system of machines connected in parallel according to another embodiment of the present disclosure;

Figure 3 is a schematic diagram illustrating a master machine according to an embodiment of the present disclosure;

Figure 4 is a schematic diagram illustrating the master machine according to another embodiment of the present disclosure;

Figure 5 is a flow chart illustrating a method for transition of the system between an on-grid mode and an off-grid mode according to an embodiment of the present disclosure; and

Figure 6 is a flow chart illustrating the method for transition of the system between the on-grid mode and the off-grid mode according to another embodiment of the present disclosure.

## DETAILED DESCRIPTION

Scenarios to which the system of machines connected in parallel according to the embodiments of the present disclosure is applicable are not limited herein. The machines each are an inverter, or a power converter.

Alternatively, the machines include an inverter and a power converter.

In order to facilitate understanding, the machines are all power converters, for example. The power converter is applicable to a photovoltaic power station or an energy storage device, e.g., a household energy storage device. Hereinafter, the power converter is applicable to the energy storage device for illustration.

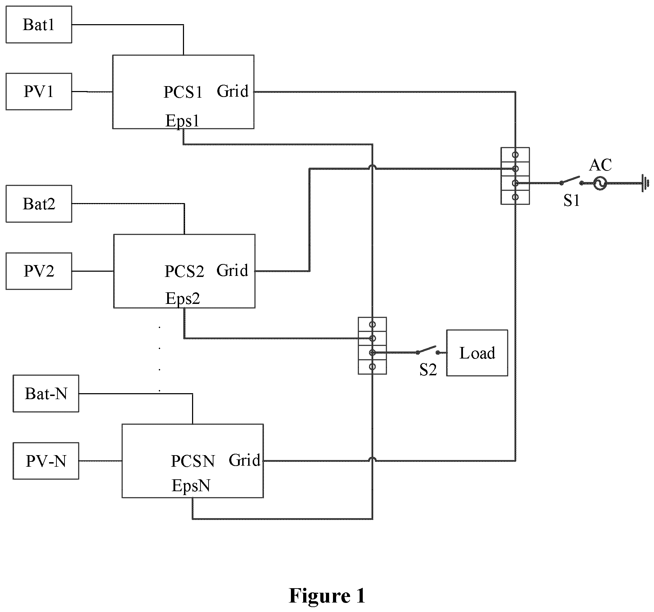

Reference is made to Figure 1, which is a schematic diagram illustrating the system of machines connected in parallel according to an embodiment of the present disclosure.

In the system of machines connected in parallel as shown in Figure 1, an input port of the power converter is connected to a battery and a photovoltaic string. In other embodiments, the input port of the power converter is connected to the battery only. The power converter is configured to charge and discharge the battery.

The system includes N machines, that is, N power converters, hereinafter a first power converter PCS1, a second power converter PCS2, to an $N^{th}$ power converter PCSN. N is an integer greater than or equal to 2.

A first input port of the first power converter PCS 1 is connected to a first battery Bat1. A second input port of the first power converter PCS1 is connected to a first photovoltaic string PV1. An on-grid port Grid of the first power converter PCS1 is connected to a first junction box. The first junction box is connected to a grid AC via a first relay S1. An off-grid port Eps1 of the first power converter PCS1 is connected to a second junction box. The second junction box is connected to a load via a second relay S2 to supply power to the load.

A first input port of the second power converter PCS2 is connected to a second battery Bat2. A second input port of the second power converter PCS2 is connected to a second photovoltaic string PV2. An on-grid port Grid of the second power converter PCS2 is connected to the first junction box. An off-grid port Eps2 of the second power converter PCS2 is connected to the second junction box.

A first input port of the $N^{th}$ power converter PCSN is connected to an $N^{th}$ battery Bat-N. A second input port of the $N^{th}$ power converter PCSN is connected to an $N^{th}$ photovoltaic string PV-N. An on-grid port Grid of the $N^{th}$ power converter PCSN is connected to the first junction box. An off-grid port EpsN of the $N^{th}$ power converter PCSN is connected to the second junction box.

The grid is an alternating current grid, for example, a single-phase alternating current. In some embodiments, the grid is a three-phase alternating current grid, and the power converter outputs three-phase alternating current power accordingly.

The embodiments of the present disclosure are described in further detail below in conjunction with the accompanying drawings and specific examples, so that the above purpose, features and advantages of the present disclosure is understandable.

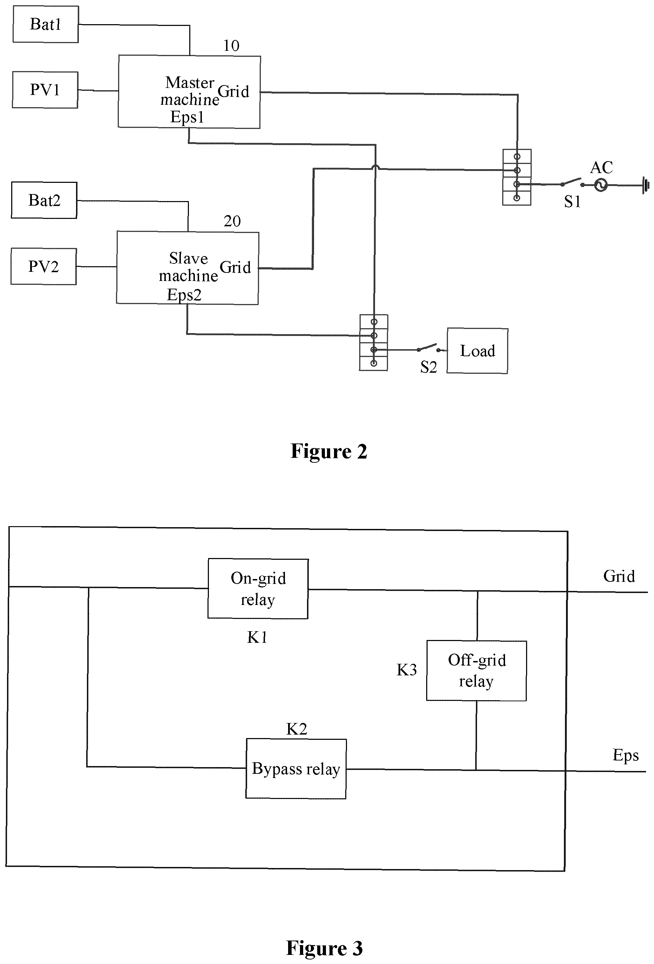

Reference is made to Figure 2, which is a schematic diagram illustrating the system of machines connected in parallel according to another embodiment of the present disclosure.

The system includes: a master machine 10 and a slave machine 20. The master machine 10 and the slave machine 20 each are an inverter or a power converter. For example, in a household energy storage device, the master machine 10 and the slave machine 20 each are the power converter. For a photovoltaic power station, the master machine 10 and the slave machine 20 each are the inverter. The slave machine is not limited in number herein, i.e., the slave machine may be one or more. A single master machine and a single slave machine are illustrated in Figure 2 for convenience of description.

An on-grid port Grid of the master machine 10 and an on-grid port Grid of the slave machine 20 are both connected to a grid AC via a first relay S1.

A first input port of the master machine 10 is connected to a first battery Bat1. A second input port of the master machine 10 is connected to a first photovoltaic string PV1. An on-grid port Grid of the master machine 10 is connected to a first junction box. The first junction box is connected to the grid AC via the first relay S1. An off-grid port Eps1 of the master machine 10 is connected to a second junction box. The second junction box is connected to a load via a second relay S2 to supply power to the load.

A first input port of the slave machine 20 is connected to a second battery Bat2. A second input port of the slave machine 20 is connected to a second photovoltaic string PV2. An on-grid port Grid of the slave machine 20 is connected to the first junction box. An off-grid port Eps2 of the slave machine 20 is connected to the second junction box.

The off-grid port Eps1 of the master machine 10 and the off-grid port Eps2 of the slave machine 20 are connected to supply power to a load.

In the transition from the on-grid mode to the off-grid mode, the master machine 10 switches from a current source mode to a voltage source mode based on a voltage with amplitude and phase at the moment when the system is off the grid. The slave machine 20 senses the amplitude and the phase of a voltage at the off-grid port of the slave machine, switches from a current source mode to a voltage source mode based on the voltage with the sensed amplitude and phase.

In the transition from the on-grid mode to the off-grid mode, the master machine switches from the current source mode to the voltage source mode based on voltage with amplitude equal to $\sqrt{N}/N$ of amplitude of the voltage in the on-grid mode. N represents a sum of the number of master machine and the number of slave machine. That is, in the transition from the on-grid mode to the off-grid mode, the master machine outputs voltage less than that in the on-grid mode.

For example, the system includes one master machine and one slave machine, that is, N is equal to 2. In this case, the master machine switched from the current source mode to the voltage source mode based on voltage with amplitude equal to $\sqrt{2}/2$ of amplitude of the voltage in the on-grid mode. In another example, the system includes one master machine and two slave machines, that is, N is equal to 3. In this case, the master machine switches from the current source mode to the voltage source mode based on voltage with amplitude equal to $\sqrt{3}/3$ of amplitude of the voltage in the on-grid mode.

In the transition from the on-grid mode to the off-grid mode, the master machine 10 and the slave machine 20 each, when detecting islanding (that is, disconnected from the grid), switch from the current source mode to the voltage source mode. In some cases, the master machine 10 and the slave machine 20 each switch from the current source mode to the voltage source mode based on voltage with given amplitude and given phase in the off-grid mode directly, resulting in large circulating current between the master machine and the slave machine.

Details that the master machine and the slave machine each detect the islanding are not described herein. The system is off the grid when the grid functions improperly, and is connected to the grid when the grid functions properly.

According to embodiments of the present disclosure, the master machine starts based on a voltage first, and subsequently the slave machine starts to track the voltage (both amplitude and phase) of the master machine, in order to avoid circulating current. For example, when sensing the voltage at its off-grid port Eps2 greater than a threshold, the slave machine directly determines the sensed voltage as the given voltage and synchronizes its output with the master machine. The off-grid port Eps1 of the master machine is connected to the off-grid port Eps2 of the slave machine. Therefore, before the slave machine starts, the voltage of the off-grid port Eps2 of the slave machine is the same as the voltage of the off-grid port Eps1 of the master machine. That is, the slave machine directly senses the output voltage of the master machine, and outputs voltage equal to the output voltage of the master machine. In view of this, circulating current calculated from I=(Umaster-Uslave)/Z is equal to 0. Umaster represents the output voltage of the master machine. Uslave represents the output voltage of the slave machine. Z represents reactance between the master machine and the slave machine. In the present disclosure, Umaster is equal to Uslave. In this way, no circulating current results between the master machine and the slave machine, and therefore no resulted overcurrent impact on the relay and a hardware circuit.

Reference is made to Figure 3, which is a schematic diagram illustrating the master machine according to an embodiment of the present disclosure.

The master machine includes an on-grid relay K1, an off-grid relay K2 and a bypass relay K3. A terminal of the on-grid relay K1 is connected to a power terminal of the master machine. Another terminal of K1 is connected to the on-grid port Grid of the master machine. A terminal of the off-grid relay K2 is connected to the power terminal of the master machine. Another terminal of K2 is connected to the off-grid port Eps of the master machine. A terminal of the bypass relay K3 is connected to the on-grid port Grid of the master machine. Another terminal of K3 is connected to the off-grid port Eps of the master machine.

When the grid functions properly, the on-grid relay K1 in the master machine is on, the bypass relay K3 between the on-grid Grid of the master machine and the off-grid Eps of the master machine is on, and the load connected to the off-grid port Eps of the master machine is supplied by the grid.

In the transition from the on-grid mode to the off-grid mode, the on-grid relay K1 of the master machine is switched off, the bypass relay K3 between the on-grid Grid of the master machine and the off-grid Eps of the master machine is switched off, and the off-grid relay K2 of the master machine is switched on. It should be understood that the slave machine may have the same structure as the master machine or a different structure than the master machine, depending on actual applications.

As shown in Figure 3, the master machine includes three relays. Hereinafter, the master machine includes two relays. That is, the master machine includes the on-grid relay and the bypass relay.

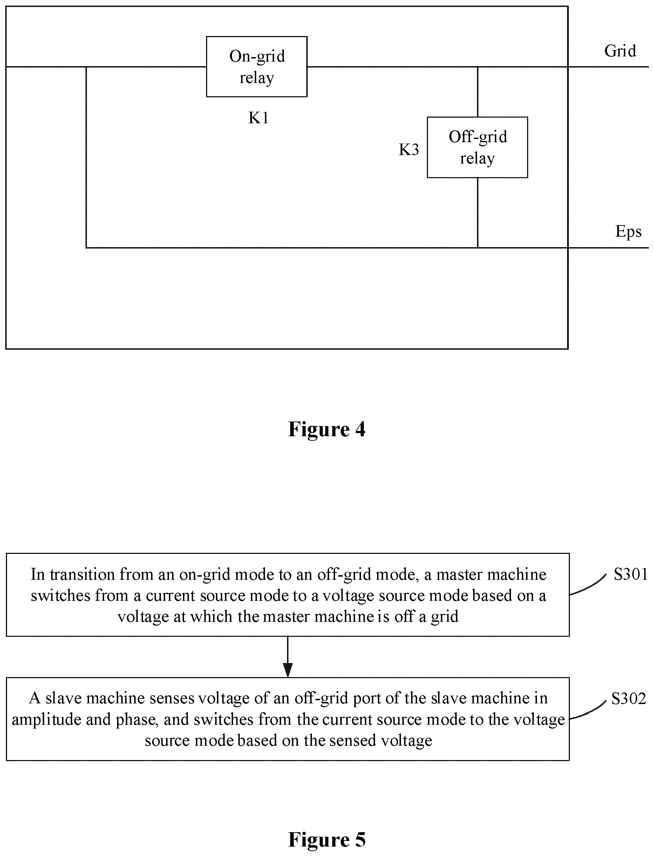

Reference is made to Figure 4, which is a schematic diagram illustrating the master machine according to another embodiment of the present disclosure.

The master machine includes an on-grid relay K1 and a bypass relay K3. A terminal of the on-grid relay K1 is connected to a power terminal of the master machine. Another terminal of K1 is connected to the on-grid port Grid of the master machine. A terminal of the bypass relay K3 is connected to the on-grid port Grid of the master machine. Another terminal of K3 is connected to the off-grid port Eps of the master machine.

In the transition from the on-grid mode to the off-grid mode, the on-grid relay K1 of the master machine is switched off, and the bypass relay K3 between the on-grid Grid of the master machine and the off-grid Eps of the master machine is switched off. It should be understood that the slave machine may have the same structure as the master machine or a different structure than the master machine, depending on actual applications.

In the embodiments of the present disclosure, the master machine and the slave machine each operate as the current source in the on-grid mode. In this way, the master machine and the slave machine can regulate a direct current bus voltage to achieve maximum power tracking, and thereby can connect to the grid or generate electricity at maximum power. Hence, energy can be fully utilized and power conversion efficiency can be maximized. However, the case that the master machine and the slave machine each operate as a voltage source results in failure to achieve the maximum power tracking, to fully utilize energy, and to maximize the efficiency.

When the system of machines connected in parallel is connected to the grid, the machines each operate as the current source. In this case, the load receives power from the on-grid port Grid. When the system of machines connected in parallel is off the grid, both the master machine and the slave machine perform droop control, that is, regulate respective powers based on droop characteristics. In the switch from the current source mode to the voltage source mode (that is, the transition from the on-grid mode to the off-grid mode), the slave machine may fail to synchronize its output voltage, i.e., amplitude and phase, with the master machine at the moment of switch due to a sampling error or difference in control timing since there is no high-speed communications between the master machine and the slave machine, resulting in active power, reactive power and direct current circulating current may occur. In case of large difference in output voltage between the master machine and the slave machine, the machine may shutdown due to overcurrent.

There are two common modes for the droop control. In the first mode, the inverter or power converter operating as the current source generates active power and reactive power based on frequency and amplitude of its output voltage. In the second mode, the inverter or power converter operating as the voltage source generates an output power based on its output voltage and frequency of the grid voltage.

In the system of machines connected in parallel according to the embodiments of the present disclosure, the master machine and the slave machine each operate as the voltage source when the system is connected to the grid. In the transition from the on-grid mode to the off-grid mode, the master machine switches to the off-grid mode based on the voltage in the off-grid mode before the slave machine. Since the off-grid port of the master machine is connected to the off-grid port of the slave machine, the voltage of the off-grid port of the slave machine is the same as the voltage of the off-grid port of the master machine. Subsequently, the slave machine senses the voltage of the off-grid port and operates tracking the voltage of the master machine. In this way, the output voltage of the master machine is equal to the output voltage of the slave machine, and therefore no voltage difference between the master machine and the slave machine. Therefore, it is unnecessary for the master machine to send the electrical parameter to the slave machine and therefore involves no high-speed communications between the master machine and the slave machine in the transition from the on-grid mode to the off-grid mode according to the technical solution of the embodiments of the present disclosure. Instead, the slave machine directly senses the voltage of its off-grid port to synchronize with the master machine. Further, there is no circulating current between the master machine and the slave machine throughout the transition.

Details about the transition from the on-grid mode to the off-grid mode have been described above. Details about the transition from the off-grid mode to the on-grid mode are described below.

In the transition from the off-grid mode to the on-grid mode, the master machine and the slave machine each sense the grid voltage at their respective on-grid ports, synchronize their respective output voltages with the grid voltage, are connected to the grid when both have synchronized with the grid voltage, and then switch from the voltage source mode to the current source mode.

In the transition from the off-grid mode to the on-grid mode, the phase of the voltage may deviate due to bandwidth and response of a phase-locked loop if the master machine and the slave machine directly switches to the on-grid mode, resulting in circulating current between the master machine and the slave machine. In view of this, the relay is switched on only after the grid voltage of the on-grid port is already synchronized with the voltage of the off-grid port in amplitude and phase. In this way, no circulating current is resulted from switching on the relay, and also no overcurrent.

In the switch from the voltage source mode to the current source mode (i.e., from the off-grid mode to the on-grid mode), the master machine and the slave machine each synchronize with the grid timely. Otherwise, circulating current results due to failure of the machine to synchronize with the grid voltage, and the relay is overloaded for a short period of time due to unsynchronized timing for switching on the relay in the transition from the off-grid mode to the on-grid mode.

According to the technical solution of the embodiments of the present disclosure, the master machine and the slave machine each sense the grid voltage at their respective on-grid ports, synchronize their respective output voltages with the grid voltage in the transition from the off-grid mode to the on-grid mode, no communications between the master machine and the slave machine involved. When the master machine and the slave machine both are already synchronized with the grid, the relay is switched on. Therefore, neither circulating current nor overcurrent results.

Alternatively, in order to more accurately avoid circulating current between the master machine and the slave machine, the relay in the master machine is switched on when a preset period of time passed since the output voltage of the master machine is already synchronized with the grid voltage, the relay in the slave machine is switched on when the preset period of time passed since the output voltage of the slave machine is already synchronized with the grid voltage. That is, the system is connected to the grid when the preset period of time passed. The preset period of time is related to a larger one between settling time of a phase-locked loop and time for the phase-locked loop to suppress a direct-current component. For example, the preset time period is greater than the larger one between the settling time and the time for the phase-locked loop to suppress the direct-current component. Since the phase-locked loop generally responds relatively slowly, circulating current may result due to the direct-current component. Therefore, the relay is switched on only after the phase-locked loop already functions stably and the direct-current component is suppressed, thereby avoiding overcurrent when switching on the relay.

In the embodiments of the present disclosure, the system of machines connected in parallel is three-phase or single-phase, which is not limited. Figure 2 illustrates the single-phase system. Here, the master machine and the slave machine each output the single-phase alternating current voltage. L and N at the off-grid port of the each of the master machine and the slave machine are connected to L and N of the load, respectively. L and N at the on-grid port of each of the master machine and the slave machine are connected to L and N of the grid, respectively. L represents a live line, and N represents a neutral line.

Based on the system of machines connected in parallel in the above embodiments, a method for controlling the system to transition between an on-grid mode and an off-grid mode is further provided according to embodiments of the present disclosure. The method is described in detail below in conjunction with the drawings.

Reference is made to Figure 5, which is a flowchart illustrating the method according to an embodiment of the present disclosure.

The method includes the following steps S301 to S302.

In S301, in the transition from the on-grid mode to the off-grid mode, a master machine switches from a current source mode to a voltage source mode based on a voltage with amplitude and phase at a time instant when the master machine is off the grid. The master machine and the slave machine each are an inverter or power converter. An on-grid port of the master machine and an on-grid port of the slave machine are both connected to the grid. An off-grid port of the master machine and an off-grid port of the slave machine are connected to supply power to a load.

The master machine and the slave machine, when operating as a voltage source, regulate their respective output power based on droop characteristics. In the transition from the on-grid mode to the off-grid mode, an on-grid relay in the master machine is switched off, a bypass relay between the on-grid port of the master machine and the off-grid port of the master machine is switched off, and an off-grid relay in the master machine is switched on.

In the transition from the on-grid mode to the off-grid mode, the master machine switches from the current source mode to the voltage source mode based on voltage with amplitude equal to $\sqrt{N}/N$ of amplitude of the voltage in the on-grid mode. N represents a sum of the number of master machine and the number of slave machine.

In S302, the slave machine senses voltage at its off-grid port in amplitude and phase, and switches from the current source mode to the voltage source mode based on the sensed voltage.

According to embodiments of the present disclosure, the master machine starts based on a voltage first, and subsequently the slave machine starts to track the voltage (both amplitude and phase) of the master machine, in order to avoid circulating current. For example, when sensing the voltage at its off-grid port greater than a threshold, the slave machine directly determines the sensed voltage as the given voltage and synchronizes its output with the master machine. The off-grid port of the master machine is connected to the off-grid port of the slave machine. Therefore, before the slave machine starts, the voltage of the off-grid port of the slave machine is the same as the voltage of the off-grid port of the master machine. That is, the slave machine directly senses the output voltage of the master machine, and outputs voltage equal to the output voltage of the master machine. In view of this, circulating current calculated from I=(Umaster-Uslave)/Z is equal to 0. Umaster represents the output voltage of the master machine. Uslave represents the output voltage of the slave machine. Z represents reactance between the master machine and the slave machine. In the present disclosure, Umaster is equal to Uslave. In this way, no circulating current results between the master machine and the slave machine, and therefore no resulted overcurrent impact on the relay and a hardware circuit.

With the method according to the embodiments of the present disclosure, the master machine and the slave machine each operate as the current source in the on-grid mode. In this way, the master machine and the slave machine can regulate a direct current bus voltage to achieve maximum power tracking, and thereby can connect to the grid or generate electricity at maximum power. Hence, energy can be fully utilized and power conversion efficiency can be maximized. However, the case that the master machine and the slave machine each operate as a voltage source results in failure to achieve the maximum power tracking, to fully utilize energy, and to maximize the efficiency.

In other embodiments of the present disclosure, the method further includes: operating the master machine and the slave machine each as the current source in the on-grid mode.

Details about the method for controlling the system to transition from the on-grid mode to the off-grid mode have been described above. Details about the method for controlling the system to transition from the off-grid mode to the on-grid mode are described below.

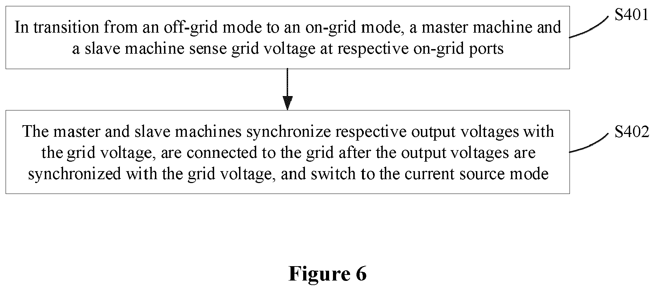

Reference is made to Figure 6, which is a flowchart illustrating the method according to another embodiment of the present disclosure.

The method includes the following steps S401 to S402.

In S401, in the transition from the off-grid mode to the on-grid mode, the master machine and the slave machine sense a grid voltage at their respective on-grid ports.

Due to no high-speed communications, the master machine and the slave machine each sense the grid voltage, to synchronize its output voltage with the grid voltage in both amplitude and phase.

In S402, the master machine and the slave machine each synchronize its output voltage with the grid voltage, are connected to the grid when the output voltage is already synchronized with the grid voltage, and switch from the voltage source mode to the current source mode.

Alternatively, in order to more accurately avoid circulating current between the master machine and the slave machine, the relay in the master machine is switched on when a preset period of time passed since the output voltage of the master machine is already synchronized with the grid voltage, the relay in the slave machine is switched on when the preset period of time passed since the output voltage of the slave machine is already synchronized with the grid voltage. That is, the system is connected to the grid when the preset period of time passed. The preset period of time is related to a larger one between settling time of a phase-locked loop and time for the phase-locked loop to suppress a direct-current component. For example, the preset time period is greater than the larger one between the settling time and the time for the phase-locked loop to suppress the direct-current component. Since the phase-locked loop generally responds relatively slowly, circulating current may result due to the direct-current component. Therefore, the relay is switched on only after the phase-locked loop already functions stably and the direct-current component is suppressed, thereby avoiding overcurrent when switching on the relay. With the method according to the embodiments of the present disclosure, the slave machine synchronizes with the master machine without high-speed communications. The master machine and the slave machine transition between the voltage source mode and the current source mode seamlessly. In the transition, the master machine and the slave machine each synchronize its output voltage with the grid voltage in amplitude and phase, and therefore neither circulating current nor overcurrent results. In this way, the robustness of the system can be maintained, and therefore the system can operate uninterruptedly to supply power to the load.

It should be noted that the embodiments in the present disclosure are described in a progressive manner, and each of the embodiments focuses on its differences from the other embodiments. The same and similar parts among the embodiments may be referred to each other. The system or device disclosed in the embodiments correspond to the method disclosed in the embodiments, and therefore are described in a relatively simply. Reference may be made to the description of the method for relevant details of the system or device.

The disclosed embodiments are detailed above, so that those skilled in the art can implement or use the present disclosure. Those skilled in the art can readily think of various modifications to the embodiments, and the generic principles defined herein may be practiced in other embodiments without departing from the spirit or scope of the present disclosure. Therefore, the present disclosure is not to be limited to the embodiments shown herein but conformed with the widest scope consistent with the principles and novel features disclosed herein.

**Claims**

1. A system of machines connected in parallel, wherein

   a master machine and a slave machine among the machines each are an inverter or a power converter;
   an on-grid port of the master machine and an on-grid port of the slave machine are configured to connect a grid;
   an off-grid port of the master machine and an off-grid port of the slave machine are connected, for supplying power to a load;
   the master machine is configured to switch from a current source mode to a voltage source mode based on amplitude and phase of voltage in transition from an on-grid mode to an off-grid mode, wherein the system is off the gird when the voltage is at the amplitude and the phase; and
   the slave machine is configured to sense voltage at the off-grid port of the slave machine in amplitude and phase, and switch from the current source mode to the voltage source mode based on the sensed voltage, in the transition from the on-grid mode to the off-grid mode.

2. The system according to claim 1, wherein

   the master machine and the slave machine are configured to operate in the current source mode, in the on-grid mode; and
   the master machine and the slave machine are configured to regulate power based on droop characteristics, in the voltage source mode.

3. The system according to claim 1 or 2, wherein an on-grid relay in the master machine is configured to be switched off, a bypass relay in the master machine between the on-grid and the off-grid of the master machine is configured to be switched off, and an off-grid relay in the master machine is configured to be switched on, in the transition from the on-grid mode to the off-grid mode.

4. The system according to claim 1 or 2, wherein the master machine is configured to switch from the current source mode to the voltage source mode when the voltage at the amplitude equal to $\sqrt{N}/N$ of amplitude of voltage in the on-grid mode, wherein the master machine and the slave machine are N in total.

5. The system according to claim 1, wherein the master machine and the slave machine are configured to sense a grid voltage at the respective on-grid ports, synchronize respective output voltages with the grid voltage, connect to the grid after the output voltages are synchronized with the grid voltage, and switch from the voltage source mode to the current source mode, in transition from the off-grid mode to the on-grid mode.

6. The system according to claim 5, wherein a relay in the master machine and a relay in the slave machine are configured to be switched on when a preset period of time passed since the output voltages are synchronized with the grid voltage, wherein the preset period of time is related to a larger one between settling time of a phase-locked loop and time for the phase-locked loop to suppress a direct-current component.

7. The system according to any one of claims 1 to 4, wherein the master machine and the slave machine each are configured to output single-phase alternating-current voltage or three-phase alternating-current voltage.

8. The system according to any one of claims 1 to 4, wherein

a first input port of the master machine is configured to connect a first battery; and a first input port of the slave machine is configured to connect a second battery.

9. The system according to claim 6, wherein

a second input port of the master machine is configured to connect a first photovoltaic string; and a second input port of the slave machine is configured to connect a second photovoltaic string.

10. The system according to claim 7, wherein the master machine is one in number, and the slave machine is one or more in number.

11. A method for controlling transition between an on-grid mode and an off-grid mode, wherein the method is applied to a system of machines connected in parallel, and the method comprises:

in transition from the on-grid mode to the off-grid mode,

switching a master machine from a current source mode to a voltage source mode based on amplitude and phase of voltage at which the system is off a gird; sensing voltage at an off-grid port of a slave machine in amplitude and phase by the slave machine; and switching the slave machine from the current source mode to the voltage source mode based on the sensed voltage, and wherein the master machine and the slave machine each are an inverter or a power converter, an on-grid port of the master machine and an on-grid port of the slave machine are connected to the grid, and an off-grid port of the master machine and the off-grid port of the slave machine are connected, for supplying power to a load.

12. The method according to claim 11, further comprising:
operating the master machine and the slave machine in a current source mode, in the on-grid mode.

13. The method according to claim 11, further comprising:
in transition from the off-grid mode to the on-grid mode,

sensing a grid voltage at respective on-grid ports and synchronizing respective output voltages with the grid voltage by the master machine and the slave machine; connecting the master machine and the slave machine to the grid after the output voltages are synchronized with the grid voltage; and switching the master machine and the slave machine from the voltage source mode to the current source mode.

14. The method according to claim 13, wherein the connecting the master machine and the slave machine to the grid comprises:
switching on a relay in the master machine and a relay in the slave machine when a preset period of time passed since the output voltages are synchronized with the grid voltage, wherein the preset period of time is related to a larger one between settling time of a phase-locked loop and time for the phase-locked loop to suppress a direct-current component.

15. The method according to any one of claims 11 to 14, wherein the switching the master machine from the current source mode to the voltage source mode based on amplitude and phase of voltage at which the system is off the gird comprises:
switching the master machine from the current source mode to the voltage source mode when the voltage at the amplitude equal to $\sqrt{N}/N$ of amplitude of voltage in the on-grid mode, wherein the master machine and the slave machine are N in total.

**Figure 1**

**Figure 2**

**Figure 3**

EP 4 481 979 A1

**Figure 4**

| | |
|---|---|
| In transition from an on-grid mode to an off-grid mode, a master machine switches from a current source mode to a voltage source mode based on a voltage at which the master machine is off a grid | S301 |
| A slave machine senses voltage of an off-grid port of the slave machine in amplitude and phase, and switches from the current source mode to the voltage source mode based on the sensed voltage | S302 |

**Figure 5**

In transition from an off-grid mode to an on-grid mode, a master machine and a slave machine sense grid voltage at respective on-grid ports — S401

The master and slave machines synchronize respective output voltages with the grid voltage, are connected to the grid after the output voltages are synchronized with the grid voltage, and switch to the current source mode — S402

**Figure 6**

Europäisches
Patentamt

European
Patent Office

Office européen
des brevets

## EUROPEAN SEARCH REPORT

**Application Number**

EP 23 21 0764

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 335 292 B1 (TESLA INC [US]) 12 August 2020 (2020-08-12) * paragraphs [0030], [0051]; figures 3, 4 * | 1-15 | INV. H02J3/38 ADD. H02J3/32 |
| Y | US 2017/005473 A1 (SOMANI APURVA [US] ET AL) 5 January 2017 (2017-01-05) * paragraphs [0082] - [0084], [0086], [0109], [0110]; figure 5 * | 1-15 | H02J3/40 |

**TECHNICAL FIELDS SEARCHED (IPC)**

H02J

The present search report has been drawn up for all claims

| Place of search | Date of completion of the search | Examiner |
|---|---|---|
| Munich | 17 July 2024 | Sulic, Tomislav |

EPO FORM 1503 03.82 (P04C01)

## ANNEX TO THE EUROPEAN SEARCH REPORT
## ON EUROPEAN PATENT APPLICATION NO.

EP 23 21 0764

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| EP 3335292 | B1 | 12-08-2020 | CN | 107925241 A | 17-04-2018 |
| | | | CN | 107925242 A | 17-04-2018 |
| | | | CN | 107925246 A | 17-04-2018 |
| | | | EP | 3335291 A1 | 20-06-2018 |
| | | | EP | 3335292 A1 | 20-06-2018 |
| | | | EP | 3360221 A1 | 15-08-2018 |
| | | | US | 2017047740 A1 | 16-02-2017 |
| | | | US | 2017047741 A1 | 16-02-2017 |
| | | | US | 2017047742 A1 | 16-02-2017 |
| | | | WO | 2017031007 A1 | 23-02-2017 |
| | | | WO | 2017031010 A1 | 23-02-2017 |
| | | | WO | 2017031011 A1 | 23-02-2017 |
| US 2017005473 | A1 | 05-01-2017 | AU | 2016287425 A1 | 24-08-2017 |
| | | | CA | 2989937 A1 | 05-01-2017 |
| | | | CN | 107431361 A | 01-12-2017 |
| | | | EP | 3245705 A1 | 22-11-2017 |
| | | | JP | 6398016 B2 | 26-09-2018 |
| | | | JP | 2018207776 A | 27-12-2018 |
| | | | JP | 2018513662 A | 24-05-2018 |
| | | | KR | 20170107558 A | 25-09-2017 |
| | | | KR | 20180088520 A | 03-08-2018 |
| | | | NZ | 734661 A | 25-06-2021 |
| | | | US | 2017005473 A1 | 05-01-2017 |
| | | | US | 2018048158 A1 | 15-02-2018 |
| | | | WO | 2017004125 A1 | 05-01-2017 |

EPO FORM P0459

For more details about this annex : see Official Journal of the European Patent Office, No. 12/82